# EUROPÄISCHE PATENTANMELDUNG

(11) **EP 3 670 594 A1**
(43) Veröffentlichungstag der Anmeldung: **24.06.2020**
(21) Anmeldenummer: 18213856.0
(22) Anmeldetag: 19.12.2018
(51) Int. Cl.: C08K 5/134, C08K 5/527

(54) **THERMOPLASTISCHE ZUSAMMENSETZUNGEN MIT GUTER STABILITÄT BEI THERMISCHER BELASTUNG**

(71) Anmelder: Covestro Deutschland AG, 51373 Leverkusen (DE)
(72) Erfinder: WANDNER, Derk, 51519 Odenthal (DE)
(74) Vertreter: Levpat

(57) **Zusammenfassung**

Die Erfindung betrifft eine Zusammensetzung zur Erzeugung einer thermoplastischen Formmasse, wobei die Zusammensetzung folgende Bestandteile enthält:
A) mindestens ein Polymer ausgewählt aus der Gruppe bestehend aus aromatischem Polycarbonat, aromatischem Polyestercarbonat und Polyester,
B) mindestens eine Verbindung gemäß der allgemeinen Formel (3) 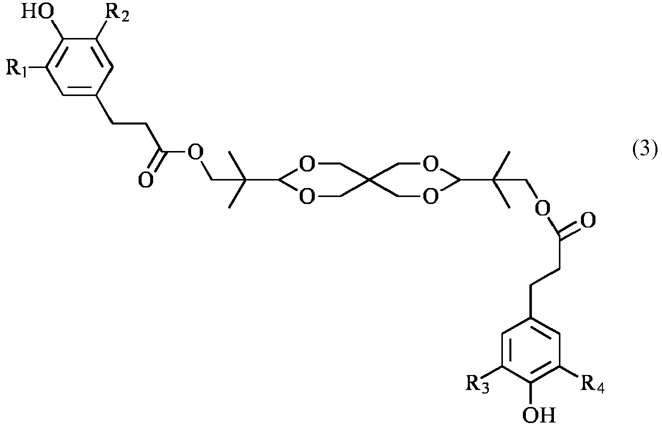 wobei R₁, R₂, R₃ und R₄ jeweils unabhängig voneinander jeweils für gegebenenfalls halogeniertes C₁- bis C₁₂-Alkyl stehen
sowie ein Verfahren zur Herstellung der Formmasse, die Formmasse selbst, die Verwendung der Zusammensetzung oder Formmasse zur Herstellung von Formkörpern und die Formkörper selbst.

## Beschreibung

Die vorliegende Erfindung betrifft thermoplastische Zusammensetzungen, zur Erzeugung von thermoplastischen Formmassen, ein Verfahren zur Herstellung von thermoplastischen Formmassen, die Formmassen selbst, die Verwendung der Zusammensetzungen oder Formmassen zur Herstellung von Formkörpern und die Formkörper selbst.
Insbesondere betrifft die Erfindung thermoplastische Polycarbonat-Zusammensetzungen.

Polycarbonat-Zusammensetzungen sind seit langem bekannt und aus diesen Materialien werden für eine Vielzahl von Anwendungen Formkörper hergestellt, beispielsweise im Automobilbereich, für Schienenfahrzeuge, für den Bausektor, für optische Datenträger, im Bereich Elektro/Elektronik und bei Haushaltsgeräten.

Polycarbonat als solches zeichnet sich durch ein gutes Eigenschaftsprofil mit hoher Schlagzähigkeit und Kerbschlagzähigkeit, Wärmeformbeständigkeit, Transparenz und Maßhaltigkeit aus.

Polycarbonat kann jedoch bei der Verarbeitung (in der Schmelze) aber auch bei Langzeitthermolagerung (Thermooxidation) einen Polymerabbau, oftmals in Verbindung mit Sauerstoff, zeigen. Dieser Abbau untern anderem die Bildung chromophorer Substanzen, welche die optischen Eigenschaften des Materials wie Transmission und Gelbwert negativ beeinflussen.

Zur Vermeidung dieser Abbaureaktionen werden dem Polycarbonat daher meist Thermostabilisatoren beigemischt. Diese lassen sich je nach ihrer Wirkungsweise in primäre und sekundäre Antioxidantien unterscheiden. Primäre Antioxidantien zerstören Hydroperoxide und Peroxide, bevor sie in Radikale zerfallen. Sekundäre Antioxidantien wirken als Radikalinhibitoren, die den Kettenmechanismus der Oxidation abbrechen.

Als Stabilisatoren zur Verbesserung des Langzeitalterungsverhaltens werden oftmals sterisch gehinderte Phenole als sekundäre Antioxidantien verwendet. Zudem wird oft als zweiter Stabilisator ein Phosphit eingesetzt.

WO 2009/138175 A1 offenbart Copolycarbonate und Zusammensetzungen enthaltend Thermostabilisatoren sowie die Verwendung zur Herstellung von Formteilen. Dabei werden zahlreiche Stabilisatoren genannt. WO 2013/079599 A1 offenbart thermoplastische Formmassen aus Polycarbonat und anorganischem Füllstoff mit guten mechanischen Eigenschaften und guter Oberfläche. Es werden spezielle Stabilisatoren auf Phosphorbasis für die Formmassen offenbart.

US 9688843 B2 offenbart Polycarbonat-Zusammensetzungen, die durch die Kombination eines Phosphites mit einem sterisch gehinderten Phenol stabilisiert worden und sich durch gute optische Eigenschaften hinsichtlich Gelbwert und Trübung auszeichnen.

EP3174928 A1 offenbart Polycarbonat-Zusammensetzungen enthaltend ein sterisch gehindertes Phenol und einen Phosphitstabilisator, die sich durch einen geringen Gelbwert und einen definierten Bereich an Umlagerungsstrukturen auszeichnen.

EP3049472 A1 beschreibt Polycarbonat-Zusammensetzungen mit einem speziellem Phosphit, die einen geringen Gelbwert aufweisen und weiterhin ein sterisch gehindertes Phenol enthalten können.

US 9234096 B2 offenbart Polycarbonat-Zusammensetzungen enthaltend eine Mischung aus zwei speziellen Phosphitstabilisatoren und einem sterisch gehinderten Phenol. Es wird eine gute Farbstabilität beschrieben.

EP 2970648 B1, EP3044265A2, US8669314 B2, DE 1019707 B4 und EP 1080146 A offenbaren verschiedene Polycarbonat-Zusammensetzung, denen jeweils eine Stabilisatormischung enthaltend ein Phosphit, ein sterisch gehindertes Phenol und einen Thioether hinzugefügt wird.

Trotz der zahlreichen Offenbarungen zur Stabilisierung von Polycarbonat-Zusammensetzungen bestand ein Bedarf nach weiteren Verbesserungen hinsichtlich optischen Eigenschaften von aus Polycarbonat-Zusammensetzungen hergestellten Formkörpern, insbesondere bei thermischer Langzeitbelastung.

Es war daher wünschenswert, eine Polycarbonat-Zusammensetzung mit nach thermischer Alterung gegenüber dem Stand der Technik geringerem Gelbwert und sehr guter Transmission zur Verfügung zu stellen.

Es wurde nun überraschenderweise gefunden, dass eine Zusammensetzung zur Erzeugung einer thermoplastischen Formmasse, wobei die Zusammensetzung folgende Bestandteile enthält:
A) mindestens ein Polymer ausgewählt aus der Gruppe bestehend aus aromatischem Polycarbonat, aromatischem Polyestercarbonat und Polyester,
B) mindestens eine Verbindung gemäß der allgemeinen Formel (3) 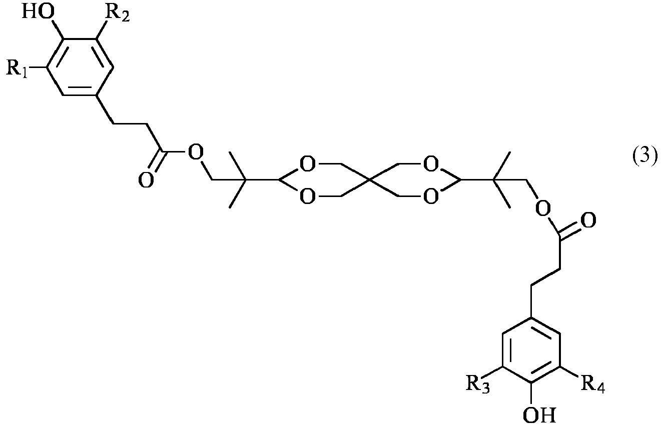
wobei R₁, R₂, R₃ und R₄ jeweils unabhängig voneinander jeweils für gegebenenfalls halogeniertes C₁- bis C₁₂-Alkyl stehen,
die vorteilhaften Eigenschaften zeigt.

In einer bevorzugten Ausführungsform enthält die Zusammensetzung weiterhin als Komponente C ein phosphorhaltiges Antioxidanz.

Die Zusammensetzung enthält bevorzugt
80 bis 99,9 Gew.-%, weiter bevorzugt 90 bis 99,4 Gew.-%, besonders bevorzugt 95 bis 98,8 Gew.-% der Komponente A,
0,001 bis 0,5 Gew.-%, weiter bevorzugt 0,005 bis 0,2 Gew.-%, besonders bevorzugt 0,01 bis 0,05 Gew.-% der Komponente B,
0 bis 1 Gew.-%, weiter bevorzugt 0,01 bis 0,5 Gew.-%, besonders bevorzugt 0,03 bis 0,15 Gew.-% der Komponente C,
0 bis 18 Gew.-%, weiter bevorzugt 0,1 bis 9 Gew.-%, besonders bevorzugt 0,2 bis 4 Gew.-% weitere polymere Bestandteile und/oder Polymeradditive verschieden von den Komponenten B und C als Komponente D.

Weiter bevorzugt werden die Komponenten B und C im einem Gewichtsverhältnis B:C von 1:6 bis 2:1 eingesetzt, ganz besonders bevorzugt in einem Gewichtsverhältnis von 1:5 bis 1:2.
In einer bevorzugten Ausführungsform besteht die Zusammensetzung zu mindestens 90 Gew.-%, weiter bevorzugt zu mindestens 95 Gew.-%, aus den Komponenten A bis D. Am meisten bevorzugt besteht die Zusammensetzungen nur aus den Komponenten A bis D.

### Komponente A

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben gewichtsgemittelte Molekulargewichte M_{w} bestimmt durch GPC (Gelpermeationschromatographie in Methylenchlorid mit Polycarbonat als Standard) von 15000 g/mol bis 50000 g/mol, bevorzugt von 20000 g/mol bis 35000 g/mol und weiter bevorzugt von 22000 g/mol bis 33000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 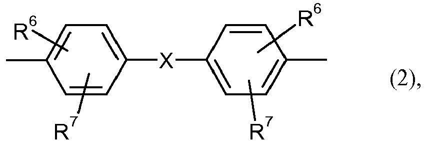 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis Cs-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

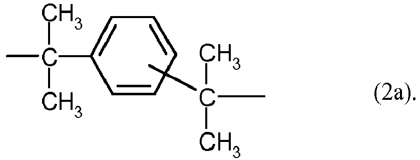

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan (Bisphenol A), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).
Insbesondere bevorzugt ist 2,2-Bis-(4-hydroxyphenyl)-propan (Bisphenol-A).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl] -propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

In bevorzugter Ausführungsform wird als Komponente A nur aromatisches Polycarbonat eingesetzt, am meisten bevorzugt ein aromatisches Polycarbonat mit Bisphenol A als Diphenol-Einheit.

### Komponente B

Als Komponente B wird mindestens eine Verbindung gemäß der allgemeinen Formel (3) eingesetzt: 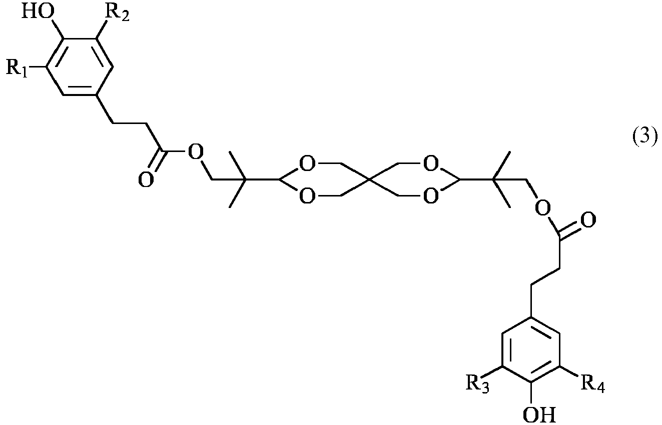 wobei in Formel (3) R₁, R₂, R₃ und R₄ jeweils unabhängig voneinander jeweils für gegebenenfalls halogeniertes C₁- bis C₁₂-Alkyl stehen. Bevorzugt stehen R₁ und R₃ jeweils für einen tert.-butyl Rest.

Am meisten bevorzugt wird als Komponente B die Verbindung gemäß Formel (4) eingesetzt.

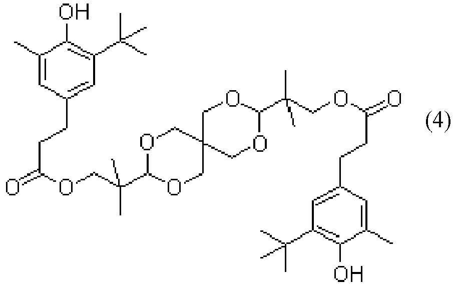

Die Verbindung (4) ist als CAS: 90498-90-1 klassifiziert und kommerziell unter dem Namen ADK Stab™ AO-80 der Firma Adeka (Japan) verfügbar.

### Komponente C

Die Zusammensetzung kann optional als Komponente C ein phosphorhaltiges Antioxidanz enthalten. Es können auch Mischungen solcher phosphorhaltiger Antioxidantien eingesetzt werden.

Die phosphorhaltigen Antioxidantien haben die allgemeine Formeln (5a bis 5e) 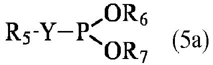 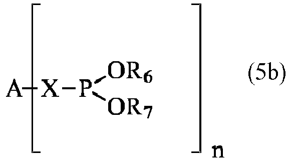 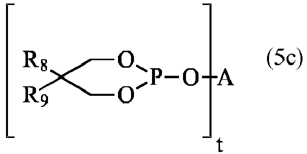 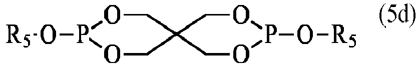 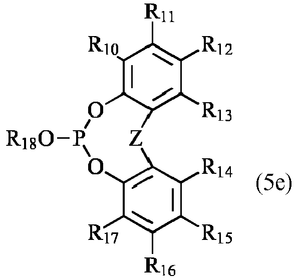 wobei in den Formeln (5a) bis (5e)
n für 2, 3 oder 4 und t für 1 oder 2 steht;
A für Alkylen mit 2 bis 18 Kohlenstoffatomen, durch -S-, -O- oder -NR'- unterbrochenes Alkylen mit 2 bis 12 Kohlenstoffatomen oder Phenylen ist, wobei R' für Wasserstoff, Alkyl mit 1 bis 18 Kohlenstoffatomen, Cycloalkyl mit 5 bis 12 Kohlenstoffatomen oder Phenlyalkyl mit 1 bis 4 Kohlenstoffatomen im Alkylteil steht;
X und Y jeweils eine direkte Bindung, Phenyl oder -O- darstellen;
Z eine direkte Bindung oder -CH₂- ist;
R₅, R₆ und R₇ jeweils unabhängig voneinander für Alkyl mit 1 bis 30 Kohlenstoffatomen, mit Halogen, -COOR', -CN oder -CONR'R' substituiertes Alkyl mit 1 bis 30 Kohlenstoffatomen; durch -S-, -O- oder -NR'₄- unterbrochenes Alkyl mit 2 bis 30 Kohlenstoffatomen; Phenyl-C₁-C₄-alkyl; Cycloalkyl mit 5 bis 12 Kohlenstoffatomen; Phenyl oder Naphthyl; mit Halogen, 1 bis 3 Alkylresten oder Alkoxyresten mit insgesamt 1 bis 30 Kohlenstoffatomen oder mit Phenyl-C₁-C₄-Alkyl ein oder mehrfach substituiertes Phenyl oder Naphthyl stehen und wobei R' die unter A genannte Bedeutung hat;
R₈ und R₉ unabhängig voneinander C₁-C₄-Alkyl oder zusammen einen 2,3-Dehydropentamethylenrest darstellen;
R₁₀, R₁₁, R₁₂, R₁₃, R₁₄, R₁₅, R₁₆, R₁₇ und R₁₈ unabhängig voneinander jeweils für gegebenenfalls halogeniertes C₁- bis C₁₂-Alkyl, C₁- bis C₁₂- Alkoxy, gegebenenfalls durch Alkyl und/oder Halogen substituiertes C₅- bis C₆-Cycloalkyl, gegebenenfalls durch Alkyl und/oder Halogen und/oder Hydroxy-substituiertes C₆- bis C₂₀-Aryloxy, Halogen oder Wasserstoff stehen.

Bevorzugt stehen R₁₀, R₁₁, R₁₂, R₁₃, R₁₄, R₁₅, R₁₆, R₁₇ und R₁₈ unabhängig voneinander jeweils für gegebenenfalls halogeniertes C₁- bis C₁₂-Alkyl, Halogen oder Wasserstoff.

Weiter bevorzugt stehen dabei R₁₁, R₁₃, R₁₄ und R₁₆ jeweils für Wasserstoff und R₁₀, R₁₂, R₁₅, R₁₇ und R₁₈ unabhängig voneinander jeweils für C₁- bis C₁₂-Alkyl.

Am meisten bevorzugt wird als Komponente C die Verbindung gemäß Formel (6) eingesetzt. 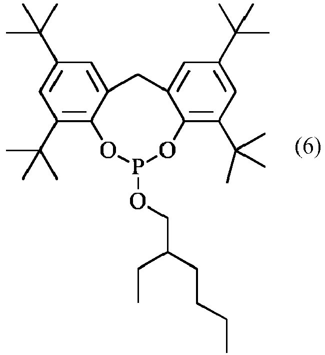 Diese Verbindung (6) ist als CAS: 126050-54-2 klassifiziert und kommerziell unter dem Namen ADK Stab™ HP-10 der Firma Adeka (Japan) verfügbar.

Durch diese Komponente C gemäß Struktur (6) wird in Verbindung mit Komponente B ein besonders gutes Eigenschaftsprofil aus hoher Transmission und geringer Vergilbung nach Lagerung bei erhöhten Temperaturen ermöglicht.

### Komponente D

Die Zusammensetzung kann als Komponente D ein oder mehrere weitere Additive oder Polymere enthalten, bevorzugt ausgewählt aus der Gruppe bestehend aus Flammschutzmitteln (z.B. organische Phosphor- oder Halogenverbindungen, insbesondere Bisphenol-A basierendes Oligophosphat), Antidrippingmitteln (beispielsweise Verbindungen der Substanzklassen der fluorierten Polyolefine, der Silikone sowie Aramidfasern), Flammschutzsynergisten (beispielsweise nanoskalige Metalloxide), Rauchinhibitoren (beispielsweise Zinkborat), Gleit- und Entformungsmitteln (beispielsweise Pentaerythrittetrastearat), Nukleiermitteln, Antistatika, Leitfähigkeitsadditiven, Fließfähigkeitspromotoren, Verträglichkeitsvermittlern, weiteren polymeren Bestandteilen (beispielsweise Polyestern oder Vinyl(co)polymeren oder funktionellen Blendpartnern), Füll- und Verstärkungsstoffen (beispielsweise Karbonfasern, Talk, Glimmer, Kaolin, CaCO₃) sowie Farbstoffen und Pigmenten (beispielsweise Titandioxid oder Eisenoxid).

In bevorzugter Ausführungsform ist die Zusammensetzung frei von Flammschutzmitteln, Antidrippingmitteln, Flammschutzsynergisten und Rauchinhibitoren.

In ebenfalls bevorzugter Ausführungsform ist die Zusammensetzung frei von Füll- und Verstärkungsstoffen.

In besonders bevorzugter Ausführungsform ist die Zusammensetzung frei von Flammschutzmitteln, Antidrippingmitteln, Flammschutzsynergisten, Rauchinhibitoren sowie Füll- und Verstärkungsstoffen.

In besonders bevorzugter Ausführungsform ist die Zusammensetzung frei von Flammschutzmitteln, Antidrippingmitteln, Flammschutzsynergisten, Rauchinhibitoren sowie Füll- und Verstärkungsstoffen.

In bevorzugter Ausführungsform enthält die Zusammensetzung mindestens ein Polymeradditiv ausgewählt aus der Gruppe bestehend aus Gleit- und Entformungsmitteln, Fließfähigkeitspromotoren, Verträglichkeitsvermittlern, weiteren polymeren Bestandteilen, Farbstoffen und Pigmenten.

In besonders bevorzugter Ausführungsform enthält die Zusammensetzung mindestens ein Polymeradditiv ausgewählt aus der Gruppe bestehend aus Gleit- und Entformungsmitteln, Fließfähigkeitspromotoren, Verträglichkeitsvermittlern, weiteren polymeren Bestandteilen, Farbstoffen und Pigmenten und ist frei von weiteren Polymeradditiven.

In bevorzugter Ausführungsform enthält die Zusammensetzung als Entformungsmittel Pentaerythrittetrastearat.

### Herstellung der Formmassen und Formkörper

Aus den erfindungsgemäßen Zusammensetzungen können thermoplastische Formmassen hergestellt werden.

Die erfindungsgemäßen thermoplastischen Formmassen können beispielsweise hergestellt werden, indem man die jeweiligen Bestandteile in bekannter Weise vermischt und bei Temperaturen von bevorzugt 200°C bis 340°C, besonders bevorzugt bei 240 bis 320°C und ganz besonders bevorzugt 240°C bis 300°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Dabei wird zumindest die Komponente A aufgeschmolzen, alle Bestandteile der Zusammensetzung ineinander dispergiert und/oder gelöst und in einem weiteren Schritt die erhaltene Schmelze durch Abkühlen wieder verfestigt und optional granuliert. Es ist möglich, die Schritte der Verfestigung und Granulierung in beliebiger Reihenfolge zueinander durchzuführen.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstand der Erfindung ist auch ein Verfahren zur Herstellung der erfindungsgemäßen Formmassen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte, sowie transparente Bauteile im allgemeinen, welche hohe Anforderungen an Farbstabilität und möglichst hohen Transmissionswerten haben.

Nachfolgend werden weitere Ausführungsformen 1 bis 24 der vorliegenden Erfindung beschrieben:
1. Zusammensetzung zur Erzeugung einer thermoplastischen Formmasse, wobei die Zusammensetzung folgende Bestandteile enthält
   A) mindestens ein Polymer ausgewählt aus der Gruppe bestehend aus aromatischem Polycarbonat, aromatischem Polyestercarbonat und Polyester,
   B) mindestens eine Verbindung gemäß der allgemeinen Formel (3) 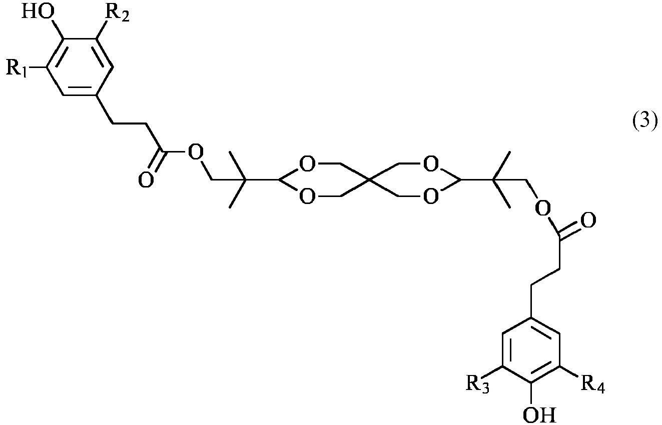 wobei R₁, R₂, R₃ und R₄ jeweils unabhängig voneinander jeweils für gegebenenfalls halogeniertes C₁- bis C₁₂-Alkyl stehen
2. Zusammensetzung gemäß Ausführungsform 1, dadurch gekennzeichnet, dass R₁ und R₃ jeweils für einen tert.-butyl Rest stehen.
3. Zusammensetzung gemäß einem der vorhergehenden Ausführungsformen, dadurch gekennzeichnet, dass Komponente B die Verbindung gemäß Formel (4) ist 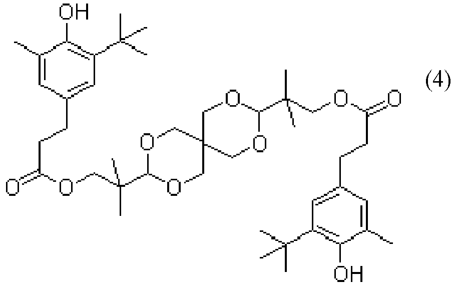
4. Zusammensetzung gemäß einem der vorhergehenden Ausführungsformen weiterhin enthaltend als Komponente C phosphorhaltiges Antioxidanz.
5. Zusammensetzung gemäß Ausführungsform 4, wobei die Komponente C eine Verbindung gemäß einer der Formeln (5a) bis (5e) ist 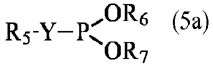 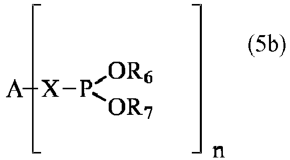 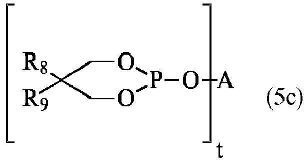 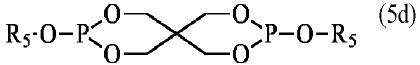 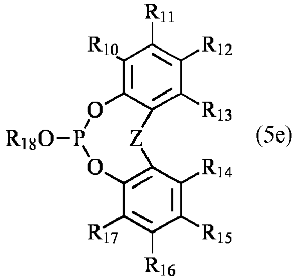 wobei in den Formeln (5a) bis (5e)
   n für 2, 3 oder 4 und t für 1 oder 2 steht;
   A für Alkylen mit 2 bis 18 Kohlenstoffatomen, durch -S-, -O- oder -NR'- unterbrochenes Alkylen mit 2 bis 12 Kohlenstoffatomen oder Phenylen ist, wobei R' für Wasserstoff, Alkyl mit 1 bis 18 Kohlenstoffatomen, Cycloalkyl mit 5 bis 12 Kohlenstoffatomen oder Phenlyalkyl mit 1 bis 4 Kohlenstoffatomen im Alkylteil steht;
   X und Y jeweils eine direkte Bindung, Phenyl oder -O- darstellen;
   Z eine direkte Bindung oder -CH₂- ist;
   R₅, R₆ und R₇ jeweils unabhängig voneinander für Alkyl mit 1 bis 30 Kohlenstoffatomen, mit Halogen, -COOR', -CN oder -CONR'R' substituiertes Alkyl mit 1 bis 30 Kohlenstoffatomen; durch -S-, -O- oder -NR'₄- unterbrochenes Alkyl mit 2 bis 30 Kohlenstoffatomen; Phenyl-C₁-C₄-alkyl; Cycloalkyl mit 5 bis 12 Kohlenstoffatomen; Phenyl oder Naphthyl; mit Halogen, 1 bis 3 Alkylresten oder Alkoxyresten mit insgesamt 1 bis 30 Kohlenstoffatomen oder mit Phenyl-C₁-C₄-Alkyl ein oder mehrfach substituiertes Phenyl oder Naphthyl stehen und wobei R' die unter A genannte Bedeutung hat;
   R₈ und R₉ unabhängig voneinander C₁-C₄-Alkyl oder zusammen einen 2,3-Dehydropentamethylenrest darstellen;
   R₁₀, R₁₁, R₁₂, R₁₃, R₁₄, R₁₅, R₁₆, R₁₇ und R₁₈ unabhängig voneinander jeweils für gegebenenfalls halogeniertes C₁- bis C₁₂-Alkyl, C₁- bis C₁₂- Alkoxy, gegebenenfalls durch Alkyl und/oder Halogen substituiertes C₅- bis C₆-Cycloalkyl, gegebenenfalls durch Alkyl und/oder Halogen und/oder Hydroxy-substituiertes C₆- bis C₂₀-Aryloxy, Halogen oder Wasserstoff stehen.
6. Zusammensetzung gemäß einer der Ausführungsformen 4 oder 5, wobei die Komponente C eine Verbindung gemäß der allgemeinen Formel (5e) ist und wobei R₁₁, R₁₃, R₁₄ und R₁₆ jeweils für Wasserstoff und R₁₀, R₁₂, R₁₅, R₁₇ und R₁₈ unabhängig voneinander jeweils für C₁- bis C₁₂-Alkyl stehen.
7. Zusammensetzung gemäß Ausführungsform 6, wobei als Komponente C die Verbindung gemäß Formel (6) eingesetzt wird. 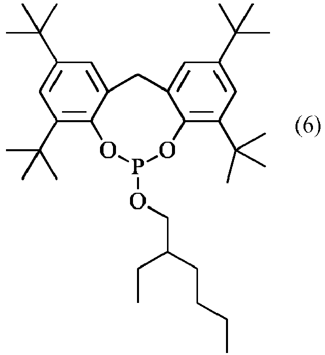
8. Zusammensetzung gemäß einer der vorherigen Ausführungsformen, wobei als Komponente A ein aromatisches Polycarbonat auf Basis von Bisphenol A eingesetzt wird.
9. Zusammensetzung gemäß einer der vorherigen Ausführungsformen weiterhin enthaltend als Komponente D mindestens ein Additiv oder Polymer ausgewählt aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Fließfähigkeitspromotoren, Verträglichkeitsvermittlern, weiteren polymeren Bestandteilen, Füll- und Verstärkungsstoffen , sowie Farbstoffen und Pigmenten.
10. Zusammensetzung gemäß einer der vorherigen Ausführungsformen, dadurch gekennzeichnet, dass die Komponente B in einer Menge von 0,001 bis 0,5 Gew.-% eingesetzt wird.
11. Zusammensetzung gemäß einer der vorherigen Ausführungsformen, dadurch gekennzeichnet, dass die Komponente B in einer Menge von 0,005 bis 0,2 Gew.-% eingesetzt wird.
12. Zusammensetzung gemäß einer der vorherigen Ausführungsformen, dadurch gekennzeichnet, dass die Komponente B in einer Menge von 0,01 bis 0,05 Gew.-% eingesetzt wird.
13. Zusammensetzung gemäß einer der vorherigen Ausführungsformen 1-10, enthaltend 80 bis 99,9 Gew.-% der Komponente A,
   0,001 bis 0,5 Gew.-% der Komponente B,
   0 bis 1 Gew.-% der Komponente C und
   0,1 bis 18 Gew.-% der Komponente D.
14. Zusammensetzung gemäß einer der vorherigen Ausführungsformen 1-11, enthaltend
   90 bis 99,4 Gew.-% der Komponente A,
   0,005 bis 0,2 Gew.-% der Komponente B,
   0,01 bis 0,5 Gew.-% der Komponente C und
   0,1 bis 9 Gew.-% der Komponente D.
15. Zusammensetzung gemäß einer der vorherigen Ausführungsformen, enthaltend
   95 bis 98,8 Gew.-% der Komponente A,
   0,01 bis 0,05 Gew.-% der Komponente B,
   0,03 bis 0,15 Gew.-% der Komponente C und
   0,2 bis 4 Gew.-% der Komponente D.
16. Zusammensetzung gemäß einer der Ausführungsformen 4 bis 14, dadurch gekennzeichnet, dass die Komponenten B und C in einem Gewichtsverhältnis von 1:6 bis 2:1 eingesetzt werden.
17. Zusammensetzung gemäß einer der Ausführungsformen 4 bis 15, dadurch gekennzeichnet, dass die Komponenten B und C in einem Gewichtsverhältnis von 1:5 bis 1:2 eingesetzt werden.
18. Zusammensetzung gemäß einer der vorherigen Ausführungsformen, bestehend zu mindestens 90 Gew.-% aus den Komponenten A, B sowie optional C und D.
19. Zusammensetzung gemäß einer der vorherigen Ausführungsformen, bestehend zu mindestens 95 Gew.-% aus den Komponenten A, B sowie optional C und D.
20. Zusammensetzung gemäß einer der vorherigen Ausführungsformen, bestehend aus den Komponenten A, B sowie optional C und D.
21. Verfahren zur Herstellung von einer Formmasse, enthaltend die Schritte (i), (ii) und optional (iii), wobei in einem ersten Schritt (i)
   Eine Zusammensetzung gemäß einer der Ausführungsformen 1 bis 20
   durch Zuführung thermischer und/oder mechanischer Energie aufgeheizt, mindestens die Komponente A) dadurch aufgeschmolzen und alle eingesetzten Komponenten ineinander dispergiert und /oder gelöst werden,
      und
   in einem weiteren Schritt (ii)
   die aus Verfahrensschritt (i) resultierende Schmelze (ii) durch Abkühlen wieder verfestigt und (iii) optional granuliert wird,
   wobei die Verfahrensschritte (ii) und (iii) in beliebiger Reihenfolge zueinander durchgeführt werden können.
22. Formmasse, erhalten oder erhältlich nach einem Verfahren nach Ausführungsform 21.
23. Verwendung einer Zusammensetzung gemäß einer der Ausführungsformen 1 bis 20 oder einer Formmasse gemäß Ausführungsform 22 zur Herstellung von Formkörpern.
24. Formkörper enthaltend eine Zusammensetzungen gemäß einer der Ausführungsformen 1 bis 20 oder einer Formmasse gemäß Ausführungsform 22.

### Beispiele

### Eingesetzte Komponenten

### Komponente A:

A: Lineares Polycarbonat auf Basis Bisphenol-A mit einem gewichtsgemittelten Molekulargewicht Mw von 24000 g/mol bestimmt durch Gelpermeationschromatographie in Methylenchlorid mit Polycarbonat als Standard.

### Komponente B-1:

Verbindung gemäß Formel (4), ADK Stab™ AO-80 der Firma Adeka (Japan);

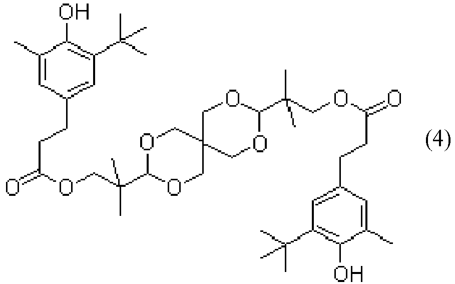

### Komponente B-2:

Verbindung gemäß Formel (7), Songnox™ 1330 der Firma Songwon Industrial Group, Südkorea

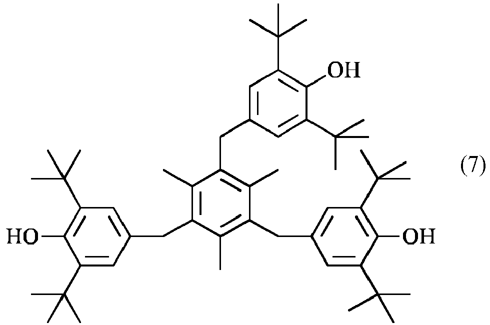

**Komponente** C: Verbindung gemäß Formel (6), ADK Stab™ HP-10 der Firma Adeka (Japan).

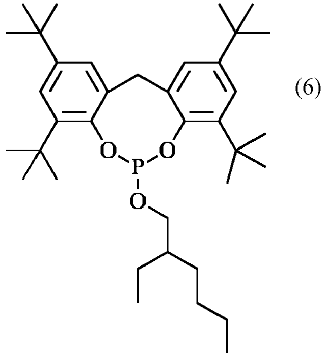

### Herstellung und Prüfung der erfindungsgemäßen Formmassen

Die Versuche wurden auf einem DSM Miniextruder MIDI 2000 bei einer Prozesstemperatur von 290°C durchgeführt. Die Prüfkörper der Dimension 6 x 3 x 1,5 cm wurden mit einer aufgesetzten, pneumatisch betrieben Spritzgusseinheit mit einem Spritzgussvolumen von 3,5 cm³ und einem Schussgewicht von 3,6 g gefertigt.

Die Transmission wurde bestimmt mit einem HunterLab UltraScan PRO gemäß CIE No. 15:2004

Der Gelbwert (YI) wurde bestimmt mit einem HunterLab UltraScan PRO gemäß der Norm ASTM E313:2015.

Die Bestimmung von Transmission, Gelbwert und Trübung fand an Probekörpern statt, die bei einer Temperatur von 135 °C für verschiedene Zeitdauern (500 und 750 Stunden) in Umluftofen der Firma Heraeus Model UT 6060 .

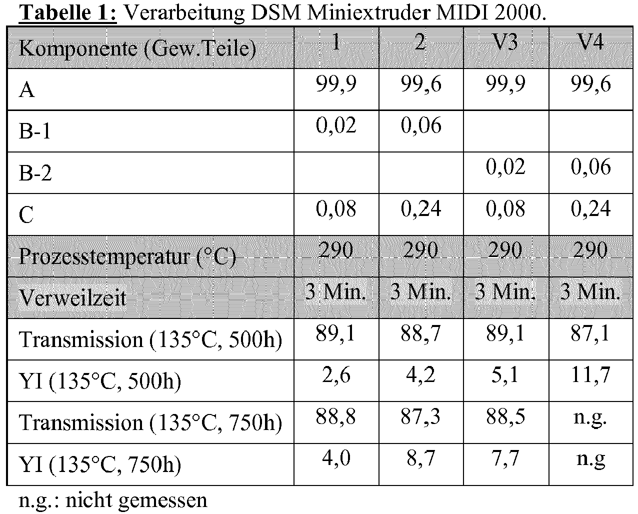

Die Beispiele in Tabelle 1 zeigen, dass beim Einsatz der erfindungsgemäßen Komponente B-1 eine höhere Transmission sowie ein niedrigerer Gelbwert nach Lagerung über einen längeren Zeitraum bei 135°C erreicht wird gegenüber entsprechenden Zusammensetzungen mit der nicht erfindungsgemäßen Phenolkomponente B-2 (Vergleichsbeispiele V1 und V2).

## Patentansprüche

1. Zusammensetzung zur Erzeugung einer thermoplastischen Formmasse, wobei die Zusammensetzung folgende Bestandteile enthält
A) mindestens ein Polymer ausgewählt aus der Gruppe bestehend aus aromatischem Polycarbonat, aromatischem Polyestercarbonat und Polyester,
B) mindestens eine Verbindung gemäß der allgemeinen Formel (3) 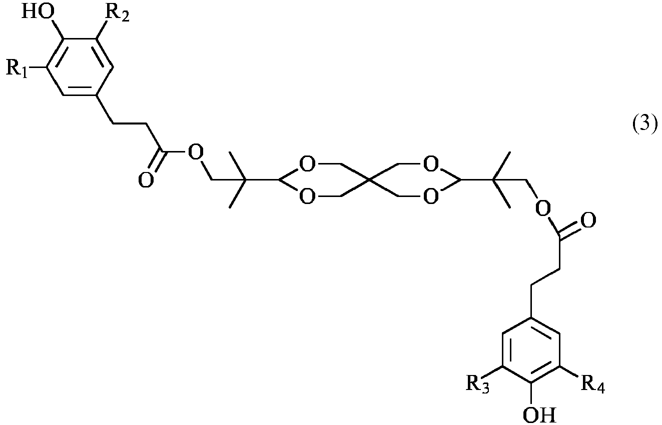 wobei R₁, R₂, R₃ und R₄ jeweils unabhängig voneinander jeweils für gegebenenfalls halogeniertes C₁- bis C₁₂-Alkyl stehen

2. Zusammensetzung gemäß Anspruch 1, **dadurch gekennzeichnet, dass** R₁ und R₃ jeweils für einen tert.-butyl Rest stehen.

3. Zusammensetzung gemäß einem der vorhergehenden Ansprüche, **dadurch gekennzeichnet, dass** Komponente B die Verbindung gemäß Formel (4) ist

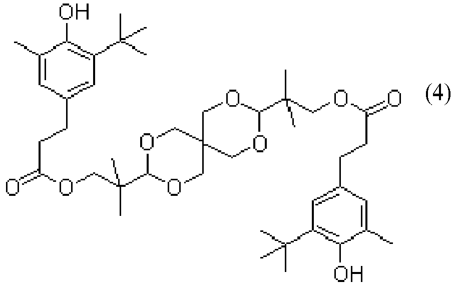

4. Zusammensetzung gemäß einem der vorhergehenden Ansprüche weiterhin enthaltend als Komponente C phosphorhaltiges Antioxidanz.

5. Zusammensetzung gemäß Anspruch 4, wobei die Komponente C eine Verbindung gemäß einer der Formeln (5a) bis (5e) ist 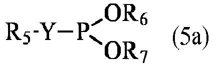 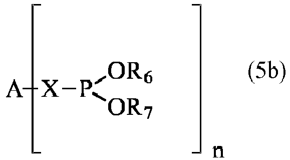 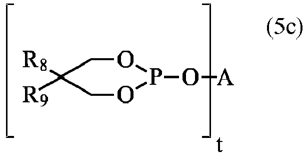 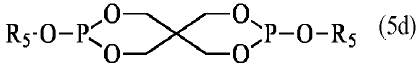 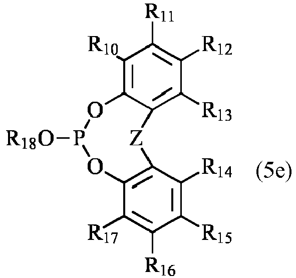 wobei in den Formeln (5a) bis (5e)
n für 2, 3 oder 4 und t für 1 oder 2 steht;
A für Alkylen mit 2 bis 18 Kohlenstoffatomen, durch -S-, -O- oder -NR'- unterbrochenes Alkylen mit 2 bis 12 Kohlenstoffatomen oder Phenylen ist, wobei R' für Wasserstoff, Alkyl mit 1 bis 18 Kohlenstoffatomen, Cycloalkyl mit 5 bis 12 Kohlenstoffatomen oder Phenlyalkyl mit 1 bis 4 Kohlenstoffatomen im Alkylteil steht;
X und Y jeweils eine direkte Bindung, Phenyl oder -O- darstellen;
Z eine direkte Bindung oder -CH₂- ist;
R₅, R₆ und R₇ jeweils unabhängig voneinander für Alkyl mit 1 bis 30 Kohlenstoffatomen, mit Halogen, -COOR', -CN oder -CONR'R' substituiertes Alkyl mit 1 bis 30 Kohlenstoffatomen; durch -S-, -O- oder -NR'₄- unterbrochenes Alkyl mit 2 bis 30 Kohlenstoffatomen; Phenyl-C₁-C₄-alkyl;
Cycloalkyl mit 5 bis 12 Kohlenstoffatomen; Phenyl oder Naphthyl; mit Halogen, 1 bis 3 Alkylresten oder Alkoxyresten mit insgesamt 1 bis 30 Kohlenstoffatomen oder mit Phenyl-C₁-C₄-Alkyl ein oder mehrfach substituiertes Phenyl oder Naphthyl stehen und wobei R' die unter A genannte Bedeutung hat;
R₈ und R₉ unabhängig voneinander C₁-C₄-Alkyl oder zusammen einen 2,3-Dehydropentamethylenrest darstellen;
R₁₀, R₁₁, R₁₂, R₁₃, R₁₄, R₁₅, R₁₆, R₁₇ und R₁₈ unabhängig voneinander jeweils für gegebenenfalls halogeniertes C₁- bis C₁₂-Alkyl, C₁- bis C₁₂- Alkoxy, gegebenenfalls durch Alkyl und/oder Halogen substituiertes C₅- bis C₆-Cycloalkyl, gegebenenfalls durch Alkyl und/oder Halogen und/oder Hydroxy-substituiertes C₆- bis C₂₀-Aryloxy, Halogen oder Wasserstoff stehen.

6. Zusammensetzung gemäß einer der Ansprüche 4 oder 5, wobei die Komponente C eine Verbindung gemäß der allgemeinen Formel (5e) ist und wobei R₁₁, R₁₃, R₁₄ und R₁₆ jeweils für Wasserstoff und R₁₀, R₁₂, R₁₅, R₁₇ und R₁₈ unabhängig voneinander jeweils für C₁- bis C₁₂-Alkyl stehen.

7. Zusammensetzung gemäß Anspruch 6, wobei als Komponente C die Verbindung gemäß Formel (6) eingesetzt wird.

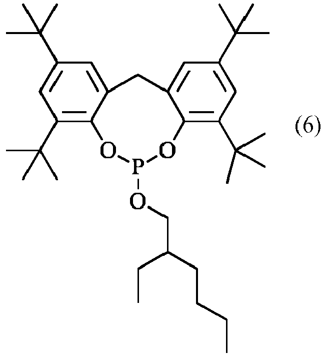

8. Zusammensetzung gemäß einem der vorherigen Ansprüche, **dadurch gekennzeichnet, dass** die Komponente B in einer Menge von 0,001 bis 0,5 Gew.-% eingesetzt wird.

9. Zusammensetzung gemäß einem der vorherigen Ansprüche, wobei als Komponente A ein aromatisches Polycarbonat auf Basis von Bisphenol A eingesetzt wird.

10. Zusammensetzung gemäß einem der vorherigen Ansprüche, enthaltend
90 bis 99,4 Gew.-% der Komponente A,
0,005 bis 0,2 Gew.-% der Komponente B,
0,01 bis 0,5 Gew.-% der Komponente C und
0,1 bis 9 Gew.-% weitere polymere Bestandteile und/oder Polymeradditive verschieden von den Komponenten B und C als Komponente D.

11. Zusammensetzung gemäß einem der Ansprüche 5 bis 10, **dadurch gekennzeichnet, dass** die Komponenten B und C in einem Gewichtsverhältnis von 1:6 bis 2:1 eingesetzt werden.

12. Verfahren zur Herstellung von einer Formmasse, enthaltend die Schritte (i), (ii) und optional (iii), wobei in einem ersten Schritt (i)
Eine Zusammensetzung gemäß einem der Ansprüche 1 bis 11
durch Zuführung thermischer und/oder mechanischer Energie aufgeheizt, mindestens die Komponente A) dadurch aufgeschmolzen und alle eingesetzten Komponenten ineinander dispergiert und /oder gelöst werden,
und
in einem weiteren Schritt (ii)
die aus Verfahrensschritt (i) resultierende Schmelze (ii) durch Abkühlen wieder verfestigt und (iii) optional granuliert wird,
wobei die Verfahrensschritte (ii) und (iii) in beliebiger Reihenfolge zueinander durchgeführt werden können.

13. Formmasse, erhalten oder erhältlich nach einem Verfahren nach Anspruch 12.

14. Verwendung einer Zusammensetzung gemäß einem der Ansprüche 1 bis 11 oder einer Formmasse gemäß Anspruch 13 zur Herstellung von Formkörpern.

15. Formkörper enthaltend eine Zusammensetzungen gemäß einem der Ansprüche 1 bis 11 oder einer Formmasse gemäß Anspruch 13.
